# FASCICULE DE BREVET EUROPEEN

(11) **EP 2 152 795 B1**
(45) Date de publication et mention de la délivrance du brevet: **04.09.2019**
(21) Numéro de dépôt: 08760485.6
(22) Date de dépôt: 04.06.2008
(51) Int. Cl.: C08K 5/09, C09K 11/06, C08L 75/00

(54) **PROCEDE DE MARQUAGE DE MATERIAUX A BASE DE MATRICES ORGANIQUES POLYMERIQUES THERMOPLASTIQUES OU THERMODURCISSABLES**
VERFAHREN ZUR KENNZEICHNUNG EINES POLYMERMATERIAL ENTHALTENDEN THERMOPLASTISCHEN UND DUROPLASTISCHEN KUNSTSTOFFEN
PROCESS FOR LABELLING MATERIALS BASED ON ORGANIC THERMOPLASTIC OR THERMOSETTING POLYMER MATRICES

(30) Priorité: 06.06.2007 FR 0704024
(43) Date de publication de la demande: 17.02.2010
(73) Titulaire: INSTITUT NATIONAL DES SCIENCES APPLIQUEES DE RENNES, 35043 Rennes Cedex (FR); Centre National de la Recherche Scientifique (C.N.R.S.), 75794 Paris Cedex 16 (FR)
(72) Inventeur: GUILLOU, Olivier, F-35510 Cesson Sevigne (FR); DAIGUEBONNE, Carole, F-35510 Cesson Sevigne (FR); KERBELLEC, Nicolas, F-56300 Pontivy (FR)
(74) Mandataire: Vidon Brevets & Stratégie
(86) Numéro de dépôt international: PCT/EP2008/056904
(87) Numéro de publication internationale: WO 2008/148792

(56) Documents cités:
- WO-A-2004/052979
- US-A- 4 572 803

## Description

La présente invention concerne le marquage des matériaux à base de matrices organiques polymériques thermoplastiques ou thermodurcissables.

Plus précisément, la présente invention concerne un procédé de marquage de tels matériaux permettant leur identification par voie optique.

Les matériaux à base de matrices organiques polymériques thermoplastiques ou thermodurcissables sont abondamment utilisés pour fabriquer quantités d'articles, notamment industriels, dont il est souvent souhaitable de pouvoir déterminer ultérieurement la provenance et/où l'authenticité. Une telle identification s'avère nécessaire notamment pour organiser la traçabilité de tels articles ou encore pour les différencier d'éventuelles contrefaçons.

La contrefaçon est actuellement un problème majeur pour de nombreuses industries à l'encontre desquelles elle provoque un manque à gagner considérable. De très nombreux domaines économiques sont touchés par ce fléau. Au-delà de l'industrie du luxe et de l'industrie de la cosmétique, traditionnellement ciblées par les contrefacteurs, cette activité touche maintenant également des domaines aussi variés que l'industrie automobile, la pharmacie et l'alimentation. Ces contrefaçons peuvent ainsi soulever des problématiques de sécurité et de santé publique.

De nombreux industriels sont donc à la recherche de procédés de marquage efficaces des produits qu'ils mettent sur les marchés et/ou des emballages utilisés pour conditionner ceux-ci. Cette demande est notamment importante pour les matériaux réalisés à partir de matrices polymériques, thermoplastiques ou thermodurcissables, qui constituent les matériaux de base de nombreux articles et substances.

On connaît dans l'état de la technique de nombreux procédés de marquage de matériaux.

Les procédés les plus sécurisés mettent notamment en oeuvre des hologrammes imprimés sur les produits à marquer ou des encres spéciales. Certains procédés mettent également en oeuvre un marquage mettant en oeuvre l'ADN. Ces techniques impliquent toutefois des coûts de mise en oeuvre élevés et ne peuvent, de ce fait, qu'être réservés aux produits à haute valeur ajoutée. Pour nombres de produits de masse réalisés en matériaux plastiques de diverses natures, il est par contre économiquement inenvisageable d'y recourir.

Il existe des techniques plus simples et moins coûteuses de marquage des produits, notamment des techniques mettant en oeuvre un marquage à l'aide de différentes substances chimiques. Malheureusement, ces techniques sont quant à elles beaucoup moins fiables dans la mesure où les molécules ou systèmes chimiques qu'elles mettent en oeuvre peuvent être relativement facilement identifiés par les contrefacteurs, qui bénéficient désormais souvent de moyens considérables, puis copiés.

L'objet de la présente invention est de proposer un procédé de marquage de matériaux réalisés à base de matrices organiques thermoplastiques ou thermodurcissables.

Un autre objectif de la présente invention est de proposer un tel procédé qui soit simple à mettre en oeuvre.

Encore un autre objectif de la présente invention est de décrire un tel procédé qui soit peu coûteux.

Egalement un objectif de l'invention est de proposer un tel procédé mettant en oeuvre des composés de marquage dont l'insertion dans la matrice hôte ne modifie pas les propriétés de celle-ci.

Un objectif de la présente invention est ainsi de proposer un tel procédé mettant en oeuvre des composés de marquage chimiquement suffisamment inertes vis-à-vis de la matrice pour que leur introduction dans celle-ci ne pose pas de problème de compatibilité avec celle-ci.

Un autre objectif de la présente invention est de décrire un tel procédé de marquage facilement et rapidement évolutif, c'est-à-dire pouvant mettre en oeuvre un très grand nombre de composés de marquage structurellement très proches mais présentant des signatures optiques aisément différenciables, de façon à autoriser un marquage différencié des articles et substances réalisés dans lesdits matériaux à base de matrices organiques thermodurcissables ou thermoplastiques les constituant, en fonction par exemple du lot de fabrication, de la date de fabrication, du client ou de l'application visée.

Encore un autre objectif de l'invention est de divulguer un tel procédé qui mette en oeuvre des composés invisibles à l'oeil nu, une fois insérés dans la matrice.

Ces objectifs, ainsi que d'autres qui apparaîtront par la suite, sont atteints grâce à l'invention qui a pour objet un procédé de marquage d'un matériau à base d'au moins une matrice organique polymérique thermoplastique ou thermodurcissable comprenant une étape consistant à y incorporer par dispersion au cours de sa fabrication ou de sa mise en forme au moins un composé à base de deux à dix terres rares photoluminescentes et d'au moins une terre rare non photoluminescente selon une concentration rendant ce composé détectable sous irradiation UV, ledit composé étant un polymère de coordination se présentant sous la forme d'une cristallite obtenue par réaction d'un ion desdites deux à dix terres rares photoluminescentes et d'un ion de ladite au moins une terre rare non photoluminescente avec au moins un ligand organique insaturé.

Ladite au moins une terre rare non photoluminescente permettra de jouer le rôle d' « espaceur » des terres rares optiquement actives.

Il était connu de l'art antérieur US4572803A et WO2004/052979 des composés à base de terres rares se distinguant des composés mis en oeuvre dans le cadre de la présente invention en n'étant pas obtenus par réaction de deux à dix terres rares photoluminescentes et d'au moins une terre rare non photoluminescente.

Selon un tel procédé, les composés de marquage sont constitués par des cristallites à base de deux à dix terres rares photoluminescentes et d'au moins une terre rare non photoluminescente, simplement dispersées dans la matrice organique à la base du matériau. Une telle dispersion n'implique aucune interaction chimique, ionique ou covalente, avec la matrice elle-même et ne conduit à aucune modification des caractéristiques spectrophotométriques desdites cristallites et à aucune modification significative des propriétés physico-chimique de la matrice.

Egalement selon l'invention, il est ainsi possible de réaliser plus d'un million de cristallites différentes ayant chacune une signature spectrophotométrique différente (pour une excitation à une longueur d'onde donnée) mais présentant par ailleurs les mêmes propriétés thermiques et chimiques. Les composés de marquage utilisables dans le cadre de la présente invention sont donc très nombreux et peuvent donc être régulièrement ou aléatoirement changés, rendant de ce fait, la copie des matériaux marqués quasi impossible pour les contrefacteurs.

De tels composés de marquage à base de deux à dix terres rares photoluminescentes et d'au moins une terre rare non photoluminescente constituent donc des traceurs permettant de marquer tout matériau à base d'une matrice organique polymérique thermoplastique ou thermodurcissable et de permettre l'identification ultérieure dudit matériau même après un temps long d'utilisation.

De tels composés sont suffisamment photoluminescents sous UV pour pouvoir être utilisés en très faibles concentrations afin d'être détectés, par spectrophotométrie ou même, pour certains d'entre eux, le cas échéant, à l'oeil nu. Le fait de pouvoir détecter la photoluminesence sous UV à l'oeil nu permet de limiter considérablement le coût de l'identification des produits marqués selon le procédé de l'invention. L'utilisation de tels traceurs en très faibles quantités permet aussi de ne pas modifier les propriétés, notamment rhéologiques, mécaniques ou thermiques du matériau ainsi marqué.

La longueur d'onde d'excitation du rayonnement UV utilisée pourra révéler la présence des cristallites dans le matériau marqué selon le procédé selon l'invention pourra être judicieusement choisie en fonction de la longueur d'onde d'absorption du ligand insaturé entrant dans la composition de la cristallite considérée. Notamment, lorsque ce ligand inclura un système π conjugué, la longueur d'onde d'excitation sera préférentiellement choisie en fonction de la longueur d'onde d'absorption de celui-ci.

De tels composés sont aussi chimiquement suffisamment inertes pour que leur introduction dans la matrice ne pose pas de problème de compatibilité avec d'autres composés présents dans les matériaux à base de matrice organique, tels que notamment les colorants et plus généralement tout type d'adjuvant.

Par ailleurs, ces composés sont aisés à mettre en évidence dans le cadre d'un contrôle de routine, puisqu'ils sont photoluminescents sous irradiation UV.

Enfin, ils présentent l'avantage d'être invisible en l'absence de rayonnement UV, une fois inclus dans le matériau.

Les terres rares sont, contrairement à leur appellation, assez répandues dans l'écorce terrestre, à l'égal des métaux usuels. Elles sont, la plupart du temps, présentes simultanément dans les minerais tel que la bastnasite, la monazite, la loparite (niobiotitanate), l'apatite, le xénotime (orthophosphate) et les argiles latéritique.

Sous forme élémentaire, les terres rares ont un aspect métallique et sont assez tendres, malléables et ductiles.

Les transitions électroniques pour les terres rares se situent entre niveaux discrets et cela se traduit par des absorptions et des émissions de lumière à caractère fortement monochromatique.

Dans le domaine de l'absorption, certaines terres rares trivalentes permettent l'obtention de colorations très particulières mises à profit dans l'industrie du verre et de la céramique où les terres rares entrent dans la composition des pigments

Au niveau de l'émission, les applications se sont développées, en liaison avec la disponibilité industrielle des terres rares à des puretés suffisantes : télévision couleur, éclairage fluorescent et radiographie médicale. Une grande variété d'émission peut être obtenue en fonction de la nature de la terre rare mise en jeu et des positions respectives des niveaux d'énergie excités ou fondamentaux. Suivant l'élément de terre rare choisi, l'émission lumineuse est localisée dans le proche ultraviolet (avec le cérium), le visible (rouge avec l'europium, orange avec le samarium, vert avec le terbium, jaune avec le dysprosium, bleu avec le thulium), ou le proche infrarouge (avec le néodyme ou l'erbium).

L'invention pourra être mise en oeuvre pour marquer de très nombreux types de matériaux à base de matrices polymériques thermoplastiques ou thermodurcissables. Notamment, l'invention pourra être utilisée pour marquer les colles, en particulier celles utilisées pour fixer les étiquettes sur tout type de produit. L'identification de la cristallite ou des cristallites contenue(s) dans de telles colles, et corollairement du produit associé à ladite étiquette, pourra être faite soit en décollant ladite étiquette du produit sur lequel elle est accolée soit en utilisant une étiquette réalisée en un matériau transparent aux UV.

Ces objectifs sont atteints grâce à l'invention qui concerne un procédé de marquage d'un matériau à base d'au moins une matrice organique polymérique thermoplastique ou thermodurcissable comprenant une étape consistant à y incorporer par dispersion au cours de sa fabrication ou de sa mise en forme au moins un composé à base de deux à dix terres rares photoluminescentes et d'au moins une terre rare non photoluminescente selon une concentration rendant ce composé détectable sous irradiation UV, ledit composé étant un polymère de coordination se présentant sous la forme d'une cristallite obtenue par réaction de deux à dix terres rares photoluminescentes et d'au moins une terre rare non photoluminescente avec au moins un ligand organique insaturé.

Selon une variante, le procédé en question comprend une étape préliminaire consistant à amener ladite matrice à une température égale ou supérieure à sa température de fusion, et une étape consistant à mélanger une quantité prédéterminée de ladite au moins une cristallite dans ladite matrice en fusion afin de la disperser dans celle-ci.

Egalement selon une variante, complémentaire ou alternative à la variante selon le paragraphe précédent, le procédé comprend une étape consistant à provoquer la dispersion d'une quantité prédéterminée de ladite au moins une cristallite dans ladite matrice organique sous une pression supérieure à la pression atmosphérique.

Préférentiellement, le procédé comprend une étape consistant à placer ledit matériau marqué sous un rayonnement UV de longueur d'onde d'excitation adaptée à l'identification de ladite au moins une cristallite incorporée dans celui-ci.

Avantageusement, lesdites terres rares photoluminescentes sontchoisies dans le groupe constitué par le cérium (Ce), le praséodyme (Pr), le néodyme (Nd), le samarium (Sm), l'europium (Eu), le terbium (Tb), le dysprosium (Dy), l'holmium (Ho), l'erbium (Er) et le thulium (Tm)

De façon préférée entre toutes, lesdites terres rares photoluminescentes sont choisies dans le groupe constituée par l'europium (Eu), le terbium (Tb), le samarium (Sm), le dysprosium (Dy) et le thulium (Tm).

Avantageusement, ladite terre rare non photoluminescente sous UV sera choisie dans le groupe constitué par le scandium (Sc), l'yttrium (Y), le lanthane (La), le gadolinium (Gd) .

Préférentiellement, ledit ligand insaturé est choisi dans le groupe constitué par les ions phthalate, isophthalate, téréphthalate, trimésate, trimellitate, pyromellitate, mellitate.

Selon une variante préférentielle de la présente invention, ladite au moins une cristallite est incluse dans ledit matériau à base d'au moins une matrice organique polymérique thermoplastique ou thermodurcissable à raison de 1ppm à 1% en masse.

Egalement selon une variante préférentielle de l'invention, ladite matrice organique thermoplastique est choisie dans le groupe constitué par le polyuréthane, le polyéthylène, le polyéthylène glycol, le polystyrène, les polyesters, les polyamides, les polycarbonates, le polyoxométhylène, l'acrylonitrile-butadiène-styrene, le polypropylène.

Egalement selon une variante préférentielle de l'invention, ladite matrice organique thermodurcissable est choisie dans le groupe constitué par les résines époxy, les acétates de polyvinyle, les acrylates.

Selon une variante de l'invention, ledit matériau à base d'au moins une matrice organique polymérique thermoplastique ou thermodurcissable inclut au moins un adjuvant tel qu'un colorant.

Egalement selon une variante de l'invention, ledit matériau à base d'au moins une matrice organique polymérique thermoplastique ou thermodurcissable constitue une colle.

Selon un aspect préférentiel de l'invention, le procédé selon celle-ci est mis en oeuvre pour le marquage d'au moins deux exemplaires d'un même matériau à base de la même matrice organique polymérique thermoplastique ou thermodurcissable et caractérisé en ce qu'il comprend une étape consistant à incorporer par dispersion dans chacun desdits exemplaires dudit matériau au cours de sa fabrication ou de sa mise en forme.
un composé, dit de premier type, selon une concentration rendant ce composé détectable sous irradiation UV dans ledit matériau, ledit composé dit de premier type étant un polymère de coordination se présentant sous la forme d'une cristallite obtenue par réaction de deux à dix terres rares photoluminescentes et d'au moins une terre rare non photoluminescente avec au moins un ligand organique insaturé, les proportions en terres rares au sein dudit composé étant distinctes pour chacun desdits exemplaires ; et/ou,
un mélange d'au moins deux composés dits de second type, chacun à base d'au moins une terre rare distincte, ledit mélange de composés étant détectable sous irradiation UV dans ledit matériau, chaque composé dit de second type dudit mélange étant un polymère de coordination se présentant sous la forme d'une cristallite obtenue par réaction de deux à dix terres rares photoluminescentes et d'au moins une terre rare non photoluminescente avec au moins un ligand organique insaturé, , les proportions desdits composés de second type au sein dudit mélange étant distinctes pour chacun desdits exemplaires.

Avantageusement, le procédé selon l'invention comprend une étape consistant à placer le matériau marqué sous un rayonnement UV de longueur d'onde d'excitation choisie en fonction de la longueur d'onde d'absorption dudit ligand insaturé.

L'invention couvre également tout matériau à base d'au moins une matrice organique polymérique thermoplastique ou thermodurcissable marqué par le procédé de marquage tel qu'exposé ci-dessus caractérisé en ce qu'il inclut au moins un marqueur photoluminescent constitué par un composé à base à base de deux à dix terres rares photoluminescentes et d'au moins une terre rare non photoluminescente selon une concentration rendant ce composé détectable sous irradiation UV, ledit composé étant un polymère de coordination se présentant sous la forme d'une cristallite obtenue par réaction desdites deux à dix terres rares photoluminescentes et de ladite au moins une terre rare non photoluminescente avec au moins un ligand organique insaturé.

Les caractéristiques et avantages de l'invention apparaîtront plus clairement grâce à la description de modes de réalisation de celle-ci donnés en référence aux dessins dans lesquels:
- la figure 1 montre le diagramme de diffraction des rayons X d'une cristallite utilisable dans le cadre de la présente invention et présentant simultanément 4 ions de terre rares ;
- la figure 2 représente le spectre de luminescence de la cristallite dont le diagramme de diffraction est représenté à la figure 1 ;
- la figure 3 montre le diagramme de diffraction des rayons X d'une cristallite utilisable dans le cadre de la présente invention et présentant simultanément 13 ions de terre rares distincts.

### 1°) Réalisation d'une cristallite à base de quatre terres rares distinctes (système quaternaire).

On a également réalisé une cristallite hétéro-tétra-métallique à base d'yttrium, de dysprosium, d'europium, de terbium et de téréphthalate de formule molaire : Y_{1.20} Dy_{0.52} Tb_{0.08} Eu_{0.20} [Ter]₃ · 4H₂O, correspondant aux proportions molaires en terres rares suivantes : Y₆₀ Dy₂₆ Tb₄ Eu₁₀

Dans un premier temps 3 équivalents du sel de sodium de l'acide 1,4-benzènedicarboxylique sont dissous dans 35mL d'eau distillée. On dissout d'autre part 1.2 équivalents de YCl₃.nH₂O dans 15mL d'eau distillée, 0.52 équivalents de DyCl₃.nH₂O dans 15mL d'eau distillée, 0.08 équivalents de TbCl₃.nH₂O dans 15mL d'eau distillée et 0.20 équivalents de EuCl₃.nH₂O dans 15mL d'eau distillée. Les quatre solutions sont maintenues sous agitation magnétique pendant 5 minutes. On mélange ensuite les quatre solutions contenant les terres rares. Le mélange est abandonné 5 minutes sous agitation magnétique puis on y ajoute la solution contenant le ligand. Il se forme immédiatement un précipité blanc. La solution est maintenue sous agitation pendant 15 minutes. Le précipité ainsi obtenu est filtré et séché à l'air libre. Le rendement de cette synthèse est de l'ordre de 95%.

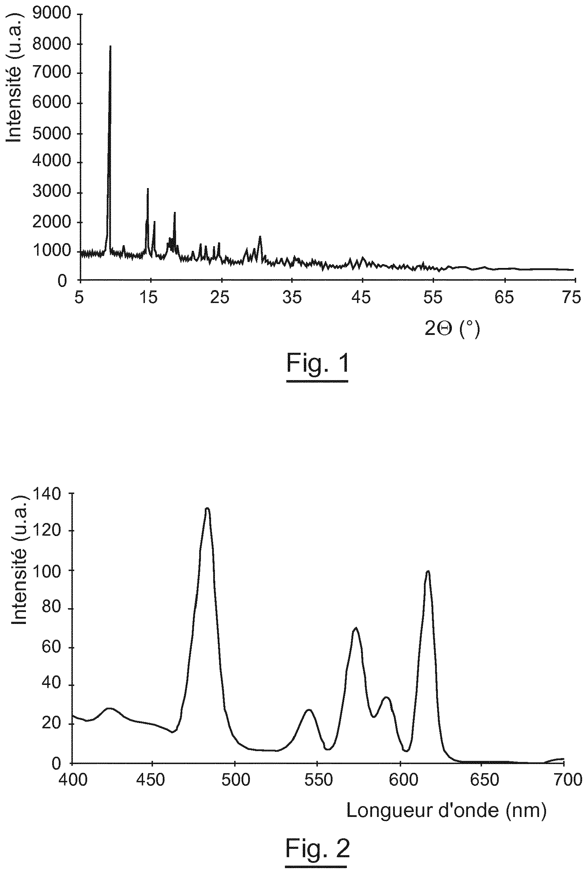

L'homogénéité de la poudre microcristalline a également été vérifiée par micro-analyses MEB et par diffraction des rayons X sur poudre. Le diagramme selon la figure 1 prouve que l'on est aussi en présence d'une seule phase mixte tétra-métallique et non d'un mélange des quatre phases mono-métalliques.

Une caractérisation spectroscopique de ce composé hétéro-tétra-métallique a été effectuée dans les mêmes conditions d'enregistrement que pour les exemples A) et B) ci-dessus. Sur le spectre de luminescence représenté à la figure 2 apparaissent les raies caractéristiques des ions terbium(III) et europium(III) et dysprosium(III). Les longueurs d'onde d'émission caractéristiques de l'europium sont centrées autour de 594nm et 617nm, celles caractéristiques du terbium sont centrées sur 488 nm, 546 nm, 589 nm et 622 nm, selon les mêmes indexations que celles mentionnées ci-dessus ; celles, enfin caractéristiques du dysprosium sont centrées sur 482 nm et 574 nm selon l'indexation suivante :

| Transitions | Longueur d'onde d'émission |
|---|---|
| ⁴F_{9/2} → ⁶H_{15/2} | 482 nm |
| ⁴F_{9/2} → ⁶H_{13/2} | 574 nm |

Les ions yttrium (III), non photoluminescents, permettent de mieux isoler les ions optiquement actifs de terbium(III), d'europium(III) et dysprosium(III). les uns des autres et joue ainsi le rôle "d'espaceurs".

### 2°) Réalisation d'une cristallite à base de treize terres rares distinctes

Une cristallite contenant en proportions pondérales équivalentes les treize terres rares suivantes : lanthane, cérium, praséodyme, néodyme, samarium, europium, gadolinium, terbium, dysprosium, holmium, erbium, thulium, et yttrium, a également été réalisée.

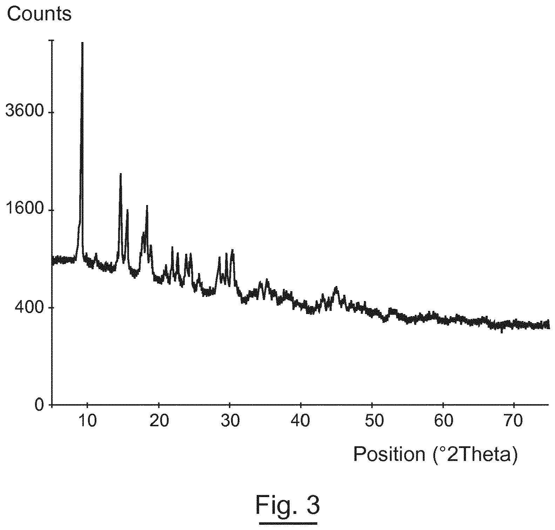

L'homogénéité de la poudre microcristalline a également été vérifiée par micro-analyses MEB et par diffraction des rayons X sur poudre. Le diagramme selon la figure 3 prouve que l'on est aussi en présence d'une seule phase mixte multi-métallique et non d'un mélange des treize phases mono-métalliques.

## Revendications

1. Procédé de marquage d'un matériau à base d'au moins une matrice organique polymérique thermoplastique ou thermodurcissable comprenant une étape consistant à y incorporer par dispersion au cours de sa fabrication ou de sa mise en forme au moins un composé à base de deux à dix terres rares photoluminescentes et d'au moins une terre rare non photoluminescente selon une concentration rendant ce composé détectable sous irradiation UV, ledit composé étant un polymère de coordination se présentant sous la forme d'une cristallite obtenue par réaction d'un ion desdites deux à dix terres rares photoluminescentes et d'un ion de ladite au moins une terre rare non photoluminescente avec au moins un ligand organique insaturé.

2. Procédé selon la revendication 1 **caractérisé en ce qu'**il comprend une étape consistant à amener ladite matrice à une température égale ou supérieure à sa température de fusion, et une étape consistant à mélanger une quantité prédéterminée de ladite au moins une cristallite dans ladite matrice en fusion afin de la disperser dans celle-ci.

3. Procédé selon la revendication 1 ou 2 **caractérisé en ce qu'**il comprend une étape préliminaire consistant à provoquer la dispersion d'une quantité prédéterminée de ladite au moins une cristallite dans ladite matrice organique sous une pression supérieure à la pression atmosphérique.

4. Procédé selon la revendication 1 à 3 **caractérisé en ce qu'**il comprend une étape consistant à placer ledit matériau sous un rayonnement UV de longueur d'onde d'excitation adaptée à l'identification de ladite au moins une cristallite incorporée dans celui-ci.

5. Procédé selon la revendication 1 à 4 **caractérisé en ce que** lesdites terres rares photoluminescentes sont choisies dans le groupe constitué par le cérium (Ce), le praséodyme (Pr), le néodyme (Nd), le samarium (Sm), l'europium (Eu), le terbium (Tb), le dysprosium (Dy), l'holmium (Ho), l'erbium (Er) et le thulium (Tm)

6. Procédé selon la revendication 5 **caractérisé en ce que** lesdites terres rares photoluminescentes sont choisies dans le groupe constitué par l'europium (Eu), le terbium (Tb), le samarium (Sm), le dysprosium (Dy) et le thulium (Tm).

7. Procédé selon l'une quelconque des revendications 1 à 6 **caractérisé en ce que** ladite terre rare non photoluminescente sous UV est choisie dans le groupe constitué par le scandium (Sc), l'yttrium (Y), le lanthane (La), le gadolinium (Gd) .

8. Procédé selon l'une quelconque des revendications 1 à 7 **caractérisé en ce que** ledit ligand insaturé est choisi dans le groupe constitué par les ions phthalate, isophthalate, téréphthalate, trimésate, trimellitate, pyromellitate, mellitate .

9. Procédé selon l'une quelconque des revendications 1 à 8, **caractérisé en ce que** ladite au moins une cristallite est incluse dans ledit matériau à base d'au moins une matrice organique polymérique thermoplastique ou thermodurcissable à raison de 1ppm à 1% en masse.

10. Procédé selon l'une quelconque des revendications 1 à 9, **caractérisé en ce que** ladite matrice organique thermoplastique est choisie dans le groupe constitué par le polyuréthane, le polyéthylène, le polyéthylène glycol, le polystyrène, les polyesters, les polyamides, les polycarbonates, le polyoxométhylène, l'acrylonitrile-butadiène-styrene, le polypropylène.

11. Procédé selon l'une quelconque des revendications 1 à 10, **caractérisé en ce que** ce que ladite matrice organique est une matrice organique thermodurcissable choisie dans le groupe constitué par les résines époxy, les acétates de polyvinyle, les acrylates.

12. Procédé selon l'une quelconque des revendications 1 à 11 **caractérisé en ce que** ledit matériau à base d'au moins une matrice organique polymérique thermoplastique ou thermodurcissable inclut au moins un adjuvant tel qu'un colorant.

13. Procédé selon l'une quelconque des revendications 1 à 12 **caractérisé en ce que** ledit matériau à base d'au moins une matrice organique polymérique thermoplastique ou thermodurcissable constitue une colle.

14. Procédé selon l'une quelconque des revendications 1 à 13 **caractérisé en ce qu'**il est mis en oeuvre pour le marquage d'au moins deux exemplaires d'un même matériau à base de la même matrice organique polymérique thermoplastique ou thermodurcissable et **caractérisé en ce qu'**il comprend une étape consistant à incorporer par dispersion dans chacun desdits exemplaires dudit matériau au cours de sa fabrication ou de sa mise en forme :
un composé, dit de premier type, selon une concentration rendant ce composé détectable sous irradiation UV dans ledit matériau, ledit composé dit de premier type étant un polymère de coordination se présentant sous la forme d'une cristallite obtenue par réaction de deux à dix terres rares photoluminescentes et d'au moins une terre rare non photoluminescente avec au moins un ligand organique insaturé, les proportions en terres rares au sein dudit composé étant distinctes pour chacun desdits exemplaires ; et/ou,
un mélange d'au moins deux composés dits de second type, chacun à base d'au moins une terre rare distincte, ledit mélange de composés étant détectable sous irradiation UV dans ledit matériau, chaque composé dit de second type dudit mélange étant un polymère de coordination se présentant sous la forme d'une cristallite obtenue par réaction de deux à dix terres rares photoluminescentes et d'au moins une terre rare non photoluminescente avec au moins un ligand organique insaturé, les proportions desdits composés de second type au sein dudit mélange étant distinctes pour chacun desdits exemplaires.

15. Procédé selon l'une quelconque des revendications 4 à 14 **caractérisé en ce qu'**il comprend une étape consistant à placer ledit matériau marqué sous un rayonnement UV de longueur d'onde d'excitation choisie en fonction de la longueur d'onde d'absorption dudit ligand insaturé.

16. Matériau à base d'au moins une matrice organique polymérique thermoplastique ou thermodurcissable marqué par le procédé de marquage selon l'une quelconque des revendications 1 à 15 **caractérisé en ce qu'**il inclut au moins un marqueur photoluminescent constitué par un composé à base de deux à dix terres rares photoluminescentes et d'au moins une terre rare non photoluminescente selon une concentration rendant ce composé détectable sous irradiation UV, ledit composé étant un polymère de coordination se présentant sous la forme d'une cristallite obtenue par réaction desdites deux à dix terres rares photoluminescentes et de ladite au moins une terre rare non photoluminescente avec au moins un ligand organique insaturé.

## Patentansprüche

1. Verfahren zum Markieren eines Materials auf Basis mindestens einer thermoplastischen oder duroplastischen organischen Polymermatrix, umfassend einen Schritt, der darin besteht, dass man darin durch Dispergieren im Lauf seiner Herstellung oder ihrer Formgebung mindestens eine Verbindung auf Basis von zwei bis zehn photolumineszierenden Seltenerdmetallen und mindestens einem nicht photolumineszierenden Seltenerdmetall gemäß einer Konzentration, die diese Verbindung unter UV-Strahlung detektierbar macht, einarbeitet, wobei es sich bei der Verbindung um ein Koordinationspolymer handelt, das in Form eines durch Reaktion eines Ions der zwei bis zehn photolumineszierenden Seltenerdmetalle und eines Ions des mindestens einen nicht photolumineszierenden Seltenerdmetalls mit mindestens einem ungesättigten organischen Liganden erhaltenen Kristallits vorliegt.

2. Verfahren nach Anspruch 1, **dadurch gekennzeichnet, dass** es einen Schritt umfasst, der darin besteht, dass man die Matrix auf eine Temperatur größer oder gleich ihrer Schmelztemperatur bringt, und einen Schritt, der darin besteht, dass man eine vorgegebene Menge des Kristallits in die geschmolzene Matrix einmischt, um ihn darin zu dispergieren.

3. Verfahren nach Anspruch 1 oder 2, **dadurch gekennzeichnet, dass** es einen vorgeschalteten Schritt umfasst, der darin besteht, dass man eine vorgegebene Menge des mindestens einen Kristallits unter einem über Atmosphärendruck liegenden Druck in der organischen Matrix dispergiert.

4. Verfahren nach Anspruch 1 bis 3, **dadurch gekennzeichnet, dass** es einen Schritt umfasst, der darin besteht, dass man das Material unter UV-Strahlung mit einer zur Identifizierung des mindestens einen darin eingearbeiteten Kristallits geeigneten Anregungswellenlänge setzt.

5. Verfahren nach Anspruch 1 bis 4, **dadurch gekennzeichnet, dass** die photolumineszierenden Seltenerdmetalle aus der Gruppe bestehend aus Cerium (Ce), Praseodym (Pr), Neodym (Nd), Samarium (Sm), Europium (Eu), Terbium (Tb), Dysprosium (Dy), Holmium (Ho), Erbium (Er) und Thulium (Tm) ausgewählt werden.

6. Verfahren nach Anspruch 5, **dadurch gekennzeichnet, dass** die photolumineszierenden Seltenerdmetalle aus der Gruppe bestehend aus Europium (Eu), Terbium (Tb), Samarium (Sm), Dysprosium (Dy) und Thulium (Tm) ausgewählt werden.

7. Verfahren nach einem der Ansprüche 1 bis 6, **dadurch gekennzeichnet, dass** das unter UV nicht photolumineszierende Seltenerdmetall aus der Gruppe bestehend aus Scandium (Sc), Yttrium (Y), Lanthan (La), Gadolinium (Gd) ausgewählt wird.

8. Verfahren nach einem der Ansprüche 1 bis 7, **dadurch gekennzeichnet, dass** der ungesättigte Ligand aus der Gruppe bestehend aus Phthalat-, Isophthalat-, Terephthalat-, Trimesat-, Trimellitat-, Pyromellitat- und Mellitat-Ionen ausgewählt wird.

9. Verfahren nach einem der Ansprüche 1 bis 8, **dadurch gekennzeichnet, dass** der mindestens eine Kristallit in dem Material auf Basis mindestens einer thermoplastischen oder duroplastischen organischen Polymermatrix in einer Menge von 1 Gew.-ppm bis 1 Gew.-% eingearbeitet wird.

10. Verfahren nach einem der Ansprüche 1 bis 9, **dadurch gekennzeichnet, dass** die thermoplastische organische Matrix aus der Gruppe bestehend aus Polyurethan, Polyethylen, Polyethylenglykol, Polystyrol, Polyestern, Polyamiden, Polycarbonaten, Polyoxymethylen, Acrylnitril-Butadien-Styrol und Polypropylen ausgewählt wird.

11. Verfahren nach einem der Ansprüche 1 bis 10, **dadurch gekennzeichnet, dass** es sich bei der organischen Matrix um eine duroplastische Matrix aus der Gruppe bestehend aus Epoxidharzen, Polyvinylacetaten und Acrylaten handelt.

12. Verfahren nach einem der Ansprüche 1 bis 11, **dadurch gekennzeichnet, dass** das Material auf Basis mindestens einer thermoplastischen oder duroplastischen organischen Polymermatrix mindestens einen Hilfsstoff wie einen Farbstoff enthält.

13. Verfahren nach einem der Ansprüche 1 bis 12, **dadurch gekennzeichnet, dass** das Material auf Basis mindestens einer thermoplastischen oder duroplastischen organischen Polymermatrix einen Klebstoff darstellt.

14. Verfahren nach einem der Ansprüche 1 bis 13, **dadurch gekennzeichnet, dass** es zur Markierung von mindestens zwei Exemplaren aus dem gleichen Material auf Basis der gleichen thermoplastischen oder duroplastischen organischen Polymermatrix durchgeführt wird, und **dadurch gekennzeichnet, dass** es einen Schritt umfasst, der darin besteht dass man in die Exemplare des Materials im Lauf seiner Herstellung oder seiner Formgebung
eine Verbindung, die als Verbindung vom ersten Typ bezeichnet wird, gemäß einer Konzentration, die diese Verbindung unter UV-Strahlung in dem Material detektierbar macht, wobei es sich bei der als Verbindung vom ersten Typ bezeichneten Verbindung um ein Koordinationspolymer handelt, das in Form eines durch Reaktion von zwei bis zehn photolumineszierenden Seltenerdmetallen und mindestens einem nicht photolumineszierenden Seltenerdmetall mit mindestens einem ungesättigten organischen Liganden erhaltenen Kristallits vorliegt, wobei die Anteile der Seltenerdmetalle in der Verbindung für jedes der Exemplare unterschiedlich sind; und/oder
eine Mischung von mindestens zwei Verbindungen, die als Verbindungen vom zweiten Typ bezeichnet werden, jeweils auf Basis eines unterschiedlichen Seltenerdmetalls, wobei die Mischung von Verbindungen unter UV-Strahlung in dem Material detektierbar ist, wobei es sich bei jeder als Verbindung vom zweiten Typ bezeichneten Verbindung um ein Koordinationspolymer handelt, das in Form eines durch Reaktion von zwei bis zehn photolumineszierenden Seltenerdmetallen und mindestens einem nicht photolumineszierenden Seltenerdmetall mit mindestens einem ungesättigten organischen Liganden erhaltenen Kristallits vorliegt, wobei die Anteile Verbindungen vom zweiten Typ in der Mischung für jedes der Exemplare unterschiedlich sind;
durch Dispergieren einarbeitet.

15. Verfahren nach einem der Ansprüche 4 bis 14, **dadurch gekennzeichnet, dass** es einen Schritt umfasst, der darin besteht, dass man das markierte Material unter UV-Strahlung mit einer in Abhängigkeit von der Absorptionswellenlänge des ungesättigten Liganden gewählten Anregungswellenlänge setzt.

16. Material auf Basis mindestens einer thermoplastischen oder duroplastischen organischen Polymermatrix, das durch das Markierungsverfahren nach einem der Ansprüche 1 bis 15 markiert ist, **dadurch gekennzeichnet, dass** es mindestens einen photolumineszierenden Marker enthält, der aus einer Verbindung auf Basis von zwei bis zehn photolumineszierenden Seltenerdmetallen und mindestens einem nicht photolumineszierenden Seltenerdmetall gemäß einer Konzentration, die diese Verbindung unter UV-Strahlung detektierbar macht, wobei es sich bei der Verbindung um ein Koordinationspolymer handelt, das in Form eines durch Reaktion der zwei bis zehn photolumineszierenden Seltenerdmetalle und des mindestens einen nicht photolumineszierenden Seltenerdmetalls mit mindestens einem ungesättigten organischen Liganden erhaltenen Kristallits vorliegt.

## Claims

1. Process for labeling a material based on at least one organic thermoplastic or thermosetting polymer matrix including a step consisting of incorporating, by dispersion during the production or shaping thereof, at least one compound based on two to ten photoluminescent rare earth elements and at least one non-photoluminescent rare earth element according to a concentration making said compound detectable under UV irradiation, in which said compound is a coordination polymer in the form of a crystallite obtained by reacting one ion of said two to ten photoluminescent rare earth elements and one ion of said at least one non-photoluminescent rare earth element with at least one unsaturated organic ligand.

2. Process according to claim 1, **characterized in that** it includes a step consisting of bringing said matrix to a temperature equal to or greater than its melting temperature, and a step consisting of mixing a predetermined amount of said at least one crystallite in said melting matrix so as to disperse it therein.

3. Process according to claim 1 or 2, **characterized in that** it includes a preliminary step consisting of causing the dispersion of a predetermined amount of said at least one crystallite in said organic matrix under a pressure greater than the atmospheric pressure.

4. Process according to claim 1 to 3, **characterized in that** it includes a step consisting of placing said material under UV radiation with an excitation wavelength suitable for the identification of said at least one crystallite incorporated therein.

5. Process according to claim 1 to 4, **characterized in that** said luminescent rare earth elements are chosen from the group consisting of cerium (Ce), praseodymium (Pr), neodymium (Nd), samarium (Sm), europium (Eu), terbium (Tb), dysprosium (Dy), holmium (Ho), erbium (Er) and thulium (Tm).

6. Process according to claim 5, **characterized in that** said photoluminescent rare earth elements are chosen from the group consisting of europium (Eu), terbium (Tb), samarium (Sm), dysprosium (Dy) and thulium (Tm).

7. Process according to any of claims 1 to 6, **characterized in that** said rare earth element that is non-photoluminescent under UV is chosen from the group consisting of scandium (Sc), yttrium (Y), lanthanum (La) and gadolinium (Gd).

8. Process according to any one of claims 1 to 7, **characterized in that** said unsaturated ligand is chosen from the group consisting of phthalate, isophthalate, terephthalate, trimesate, trimellitate, pyromellitate and mellitate ions.

9. Process according to any one of claims 1 to 8, **characterized in that** said at least one crystallite is included in said material based on at least one organic thermoplastic or thermosetting polymer matrix in an amount of 1 ppm to 1% by weight.

10. Process according to any one of claims 1 to 9, **characterized in that** said organic thermoplastic matrix is chosen from the group consisting of polyurethane, polyethylene, polyethylene glycol, polystyrene, polyesters, polyamides, polycarbonates, polyoxomethylene, acrylonitrile-butadiene-styrene and polypropylene.

11. Process according to any one of claims 1 to 10, **characterized in that** said organic matrix is an organic thermosetting matrix chosen from the group consisting of epoxy resins, polyvinyl acetates and acrylates.

12. Process according to any one of claims 1 to 11, **characterized in that** said material based on at least one organic thermoplastic or thermosetting polymer matrix includes at least one adjuvant such as a dye.

13. Process according to any one of claims 1 to 12, **characterized in that** said material based on at least one organic thermoplastic or thermosetting polymer matrix is an adhesive.

14. Process according to any one of claims 1 to 13, **characterized in that** it is implemented in order to label at least two copies of a same material based on the same organic thermoplastic or thermosetting polymer matrix, and **characterized in that** it includes a step consisting of incorporating, by dispersion in each of said copies of said material during the production or shaping thereof:
a so-called first type of compound, according to a concentration making said compound detectable under UV irradiation in said material, in which said so-called first type of compound is a coordination polymer in the form of a crystallite obtained by reacting two to ten photoluminescent rare earth elements and at least one non-photoluminescent rare earth element with at least one unsaturated organic ligand, in which the proportions of the rare earth elements in said compound are distinct for each of said copies; and/or
a mixture of at least two compounds of a so-called second type, each based on at least one distinct rare earth element, in which said mixture of compounds can be detected under UV irradiation in said material, each so-called second type of compound of said mixture is a coordination polymer in the form of a crystallite obtained by reacting two to ten photoluminescent rare earth elements and at least one non-photoluminescent rare earth element with at least one unsaturated organic ligand, in which the proportions of said compounds of the second type in said mixture are distinct for each of said copies.

15. Process according to any of claims 4 to 14, **characterized in that** it includes a step consisting of placing the labeled material under UV radiation with an excitation wavelength chosen according to the absorption wavelength of said unsaturated ligand.

16. Material based on at least one organic thermoplastic or thermosetting polymer matrix labeled by the labeling process according to any one of claims 1 to 15, **characterized in that** it includes at least one photoluminescent labeler consisting of a compound based on two to ten photoluminescent rare earth elements and at least one non-photoluminescent rare earth element according to a concentration making said compound detectable under UV irradiation, in which said compound is a coordination polymer in the form of a crystallite obtained by reacting said two to ten photoluminescent rare earth elements and said at least one non-photoluminescent rare earth element with at least one unsaturated organic ligand.
